# NOUVEAU FASCICULE DE BREVET EUROPEEN

(11) **EP 0 322 294 B2**
(45) Date de publication et mention de la décision concernant l'opposition: **15.02.1995**
(45) Mention de la délivrance du brevet: 27.03.1991
(21) Numéro de dépôt: 88403230.1
(22) Date de dépôt: 19.12.1988
(51) Int. Cl.: F15B 1/14

(54) **Procédé de montage d'un accumulateur hydropneumatique**
Verfahren zum Zusammenbau eines hydropneumatischen Druckspeichers
Method for mounting a hydropneumatic accumulator

(30) Priorité: 21.12.1987 FR 8718332
(43) Date de publication de la demande: 28.06.1989
(73) Titulaire: AUTOMOBILES PEUGEOT, 75116 Paris (FR); AUTOMOBILES CITROEN, 92200 Neuilly-sur-Seine (FR)
(72) Inventeur: Richard,Denis, F-94600 Choisy Le Roi (FR)
(74) Mandataire: Boivin, Claude

(56) Documents cités:
- DE-A- 1 929 462
- DE-A- 2 048 647
- DE-A- 2 139 367
- DE-A- 2 336 965
- DE-A- 2 419 557
- DE-A- 2 534 361
- DE-A- 3 207 754
- DE-C- 2 159 293
- FR-A- 2 230 882
- GB-A- 1 479 935
- US-A- 2 345 124

## Description

La présente invention concerne un procédé de montage d'un accumulateur hydropneumatique comportant une enveloppe constituée d'un bol et d'un couvercle liés par un cordon de soudure, à l'intérieur de laquelle est montée de manière étanche une membrane séparant l'enveloppe entre une première chambre contenant du liquide et une deuxième chambre contenant du gaz, la membrane étant montée sur une bague de maintien par l'intermédiaire d'un bourrelet engagé dans une gorge de la bague de maintien qui assure le serrage de la membrane à l'intérieur de l'enveloppe.

Un accumulateur de ce genre est décrit dans le brevet français 2 230 882. Dans cet accumulateur connu, la partie de la bague de maintien extérieure sphérique présentant face au cordon de soudure une surface concave destinée à recevoir une matière repoussant la soudure.

Une telle disposition n'est pas appropriée à la réalisation d'un cordon de soudure sans apport de matière.

Le document DE-A- 3 207 754 décrit un accumulateur hydropneumatique analogue dans lequel la partie supérieure du bol et la partie inférieure du couvercle présentent chacune une partie conique correspondante de la bague de maintien. Dans cet accumulateur, le cordon de soudure est effectué avec apport de matière.

La présente invention a pour objet un procédé de montage d'un accumulateur hydropneumatique qui permet une soudure sans apport de matière, par exemple par faisceaux laser.

Ce procédé qui est du type mentionné dans le préambule de la revendication 1 est caractérisé en ce qu'on dispose la bague de maintien à l'intérieur du bol de façon que son diamètre maximal, résultant de l'intersection de deux parties coniques inverses, se trouve au droit du cordon de soudure à réaliser et que, le couvercle étant positionné sur la portée conique de la bague de maintien, il existe un jeu entre les surfaces de contact du bol et du couvercle de manière que le contact entre les surfaces coniques de la bague de maintien, du bol et du couvercle soit assuré par le placage des surfaces de contact bol/couvercle pour la soudure, et qu'on assure cette soudure sans apport de matière.

Ce procédé permet le centrage du couvercle et du bol sur la bague de maintien qui est positionnée de manière positive entre le bol et le couvercle.

Le cordon de soudure peut présenter une interruption de manière à réaliser une mise à l'atmosphère des zones de contact entre les portées coniques de la bague de maintien, du bol et du couvercle afin d'assurer une meilleure étanchéité.

On a décrit ci-après, à titre d'exemple non limitatif, divers modes de réalisation de l'accumulateur selon l'invention, avec référence aux dessins annexés dans lesquels :
La Figure 1 représente un premier mode de réalisation partiellement en élévation, partiellement en coupe axiale :
Les Figures 2 et 3 montrent en coupe axiale un détail de l'accumulateur de la Figure 1, lors de son montage ;
Les Figures 4 et 5 sont des vues en coupe axiale d'un détail de deux autres modes de réalisation.

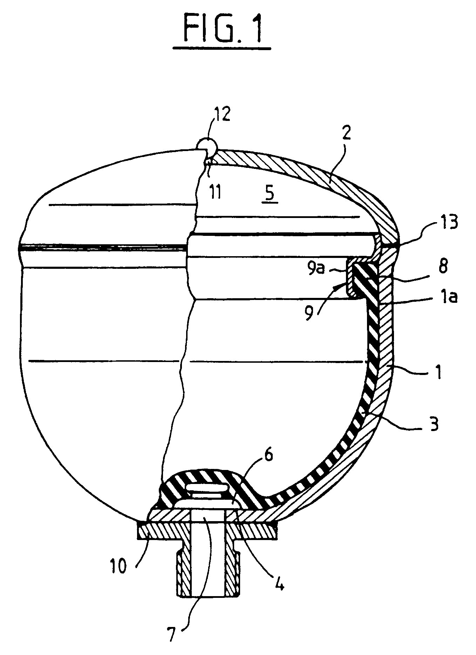

Tel qu'il est représenté à la Figure 1, l'accumulateur hydropneumatique comprend un bol 1 et un couvercle 2 en tôle d'acier extra doux laminé à chaud, permettant les emboutis profonds. A l'intérieur de l'enveloppe se trouve une membrane 3 qui sépare l'enveloppe en une première chambre 4 remplie de liquide et une deuxième chambre 5 remplie de gaz ; cette membrane est en élastomère, par exemple de l'UREPAN ou de l'EPICHLORYDRINE si le liquide hydraulique est de l'huile minérale. Elle est munie d'un clapet 6, en matière plastique dure, boutonné dans un logement aménagé dans la membrane. La fonction du clapet est d'obturer un trou 7 du bol 1 quand il n'y a plus de pression hydraulique afin d'éviter l'extrusion de l'élastomère dans le trou. La membrane 3 présente un bourrelet 8 qui assure l'étanchéité entre les deux chambres 4 et 5 par serrage entre la partie cylindrique 1a du bol inférieur, et la partie cylindrique 9a d'une bague de maintien 9. Un embout 10 de raccordement au circuit hydraulique est soudé par laser sur le bol inférieur. Après gonflage à l'azote, un orifice de remplissage 11 ménagé dans le couvercle 2 est obturé par un bouchon 12 en acier doux, par exemple une bille, soudé électriquement

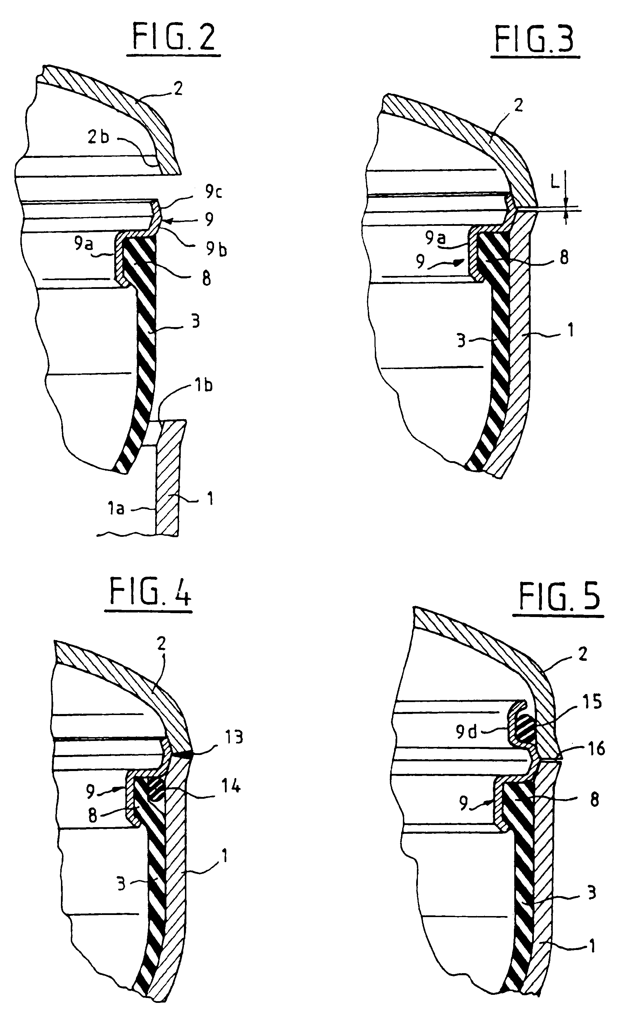

Comme on le voit plus particulièrement aux Figures 2 et 3, la partie de la bague de maintien 9 extérieure à la membrane 3 présente une paroi extérieure en double cône 9b-9c : la partie supérieure du bol 1 et la partie inférieure du couvercle 2 présentent une portée conique 1b ou 2b coopérant lorsque l'accumulateur est monté, avec le double cône 9b-9c de la bague 9.

Le montage s'effectue en emmanchant d'abord le bourrelet 8 de la membrane dans la bague de maintien 9. L'ensemble membrane 3 / bague 9 est descendu dans le bol 1. En exerçant un effort axial sur cet ensemble, la portée conique 1b aide le bourrelet 8 à s'engager dans la partie cylindrique 1a du bol 1 jusqu'à l'obtention du contact du cône 9b sur la porté conique 1b. L'étanchéité est alors assurée par le serrage du bourrelet 8 entre la partie cylindrique 1a du bol et la partie cylindrique 9a de la bague de maintien 9. Le couvercle 2 est ensuite mis en place par placage de sa portée conique 2b sur le cône 9c de la bague de maintien. Les chaînes de cotes ont été établies de telle façon que la bague de maintien soit toujours en contact sur les portées coniques du bol et du couvercle. Il en résulte entre les tranches du bol et du couvercle une cote L variant de 0 à quelques dizièmes de millimètre. Pour assurer la formation d'un cordon de soudure étanche 13 par laser donc sans apport de métal, il faut qu'il y ait placage de la tranche du bol sur la tranche du couvercle. Ce placage est obtenu en exerçant un effort axial sur le couvercle jusqu'à déformation de la portée conique 9c de la bague de maintien.

Pour certaines conditions d'utilisation, et notamment pour des minima et des maxima de températures moins sévères, on peut se contenter d'une membrane en polyuréthane injectable, genre de DESMOPAN, qui revient moins cher, tant en coût matière qu'en coût de transformation. Le matériau ne possédant pas la souplesse du caoutchouc, on peut obtenir l'étanchéité par adjonction d'un élément élastique d'étanchéité par exemple un joint torique 14 engagé dans un décrochement prévu sur la face de la membrane 3 tournée vers le bol 1, au niveau de son bourrelet 8 (Figure 4).

Le mode de réalisation de la Figure 5 ne nécessite pas de condition d'étanchéité de la soudure. La bague de maintien 9 est prolongée en 9d vers le couvercle 2 de façon à pouvoir placer un joint d'étanchéité 15 entre la bague et le couvercle. On interrompt volontairement le cordon de soudure sur une zone de quelques millimètres, zone indiquée en 16, ce qui met la zone de contact des cônes à l'atmosphère. Après remplissage de la chambre 5, la pression d'azote interne pousse le joint 15 et le bourrelet 8, sans les extruder pour autant puisqu'il y a contact des pièces métalliques, mais ces éléments seront toujours en position d'étanchéité tant qu'il règnera une pression intérieure.

## Revendications

1. Procédé de montage d'un accumulateur hydropneumatique comportant une enveloppe constituée d'un bol (1) et d'un couvercle (2) liés par un cordon de soudure (13), à l'intérieur de laquelle est montée de manière étanche une membrane (3) séparant l'enveloppe entre une première chambre (4) remplie de liquide et une deuxième chambre (5) remplie de gaz, la membrane (3) étant montée sur une bague de maintien (9) par l'intermédiaire d'un bourrelet (8) engagé dans une gorge de la bague de maintien qui assure le serrage de la membrane (3) à l'intérieur de l'enveloppe, la partie supérieure du bol et la partie inférieure du couvercle présentant chacune une partie conique coopérant avec une partie conique correspondante de la bague de maintien,
caractérisé en ce qu'on dispose la bague de maintien (9) à l'intérieur du bol (1) de façon que son diamètre maximal, résultant de l'intersection de deux portées coniques inverses (9b et 9c), se trouve au droit du cordon de soudure à réaliser et que, le couvercle (2) étant positionné sur la portée conique (9c) de la bague de maintien (9), il existe un jeu "L" entre les surfaces de contact du bol (1) et du couvercle (2) de manière que le contact entre les surfaces coniques de la bague de maintien (9), du bol (1) et du couvercle (2) soit assuré par le placage des surfaces de contact bol (1)/couvercle (2) pour la soudure, et qu'on assure cette soudure sans apport de matière.

2. Procédé de montage de l'accumulateur hydropneumatique selon la revendication 1,
caractérisé en ce que la membrane (3) présente au niveau du bourrelet (8) sur sa face tournée vers le bol (1) un décrochement à l'intérieur duquel est engagé un joint d'étanchéité torique (14).

3. Procédé de montage de l'accumulateur hydropneumatique selon la revendication 1,
caractérisé en ce la bague de maintien (9) présente au-delà de la portée (9c) un prolongement (9d) servant de logement à un joint d'étanchéité torique (15).

4. Procédé de montage de l'accumulateur hydropneumatique selon la revendication 3,
caractérisé en ce que le cordon de soudure (13) présente une interruption (16) de manière à réaliser une mise à l'atmosphère des zones de contact entre les portées coniques de la bague de maintien, du bol (1) et du couvercle (2) afin d'assurer une meilleure étanchéité.

## Claims

1. Method for mounting a hydropneumatic accumulator comprising a casing formed of a bowl (1) and a cover (2) linked by a weld seam (13) inside which a membrane (3) is seal-mounted separating the casing between one first chamber (4) filled with liquid and a second chamber (5) filled with gas, the membrane (3) being mounted on a retaining ring (9) by means of a flange (8) engaged in a throat of the retaining ring which ensures tightening of the membrane (3) inside the casing, the upper portion of the bowl and the lower portion of the cover each having a conical bearing cooperating with a corresponding conical bearing of the retaining ring,
wherein the retaining ring (9) is disposed inside the bowl (1) so that its maximum diameter, resulting from the intersection of two inverted conical bearings (9b and 9c), is located at the right of the weld seam to be embodied, and wherein, with the cover being positioned on the conical bearing (9c) of the retaining ring (9), a play "L" exists between the contact surfaces of the bowl (1) and cover (2) so that the contact between the conical surfaces of the retaining ring (9), bowl (1) and cover (2) is ensured by placing the bowl (1)/cover (2) contact surfaces for welding, said welding being effected without adding any additional material.

2. Method for mounting the hydropneumatic accumulator according to claim 1,
wherein the flange of the membrane (3), on its face orientated towards the bowl (1), has a horizontal flexure inside which an O-ring (14) is engaged.

3. Method for mounting the hydropneumatic accumulator according to claim 1A,
wherein the retaining ring (9) has beyond the bearing (9c) an extension (9d) used to house an O-ring (15).

4. Method for mounting the hydropneumatic accumulator according to claim 3,
wherein the weld seam (13) is interrupted (16) so as to aerate the contact zones between the conical bearings of the retaining ring, bowl (1) and cover and thus improve imperviousness.

## Patentansprüche

1. Verfahren zum Zusammenbau eines hydropneumatischen Druckspeichers, der ein Gehäuse aufweist, das aus einer Schale (1) und einem Deckel (2) gebildet ist, die durch eine Schweißnaht (13) miteinander verbunden sind, und in dessen Inneren eine Membran (3) in abdichtender Weise eingebaut ist, die das Gehäuse in eine erste, mit Flüssigkeit gefüllte Kammer (4) und in eine zweite, mit Gas gefüllte Kammer (5) abtrennt und die an einem Haltering (9) mittels eines Wulstes (8) befestigt ist, der in eine Hohlkehle des Halterings eingreift, der die Einspannung der Membran (3) im Inneren des Gehäuses sicherstellt, wobei der obere Teil der Schale und der untere Teil des Deckels je einen konischen Bereich aufweisen, der mit einem entsprechenden konischen Bereich des Halterings zusammenwirkt, **dadurch gekennzeichnet**, daß der Haltering (9) im Inneren der Schale (1) so angeordnet wird, daß sich sein größter Durchmesser, der sich aus der Verschneidung von zwei entgegengesetzt gerichteten konischen Bereichen (9b und 9c) ergibt, gerade an der auszuführenden Schweißnaht befindet, und daß nach dem Positionieren des Deckels (2) auf dem konischen Bereich (9c) des Halterings (9) ein Spiel "L" zwischen den Kontaktflächen der Schale (1) und des Deckels (2) dergestalt vorhanden ist, daß der Kontakt zwischen den konischen Flächen des Halterings (9), der Schale (1) und des Deckels (2) durch das Aufeinanderbringen der Kontaktflächen Schale (1)/Deckel (2) für das Schweißen sichergestellt ist, und daß dieses Schweißen ohne Zusatz von Material erfolgt.

2. Verfahren zum Zusammenbau des hydropneumatischen Druckspeichers nach Anspruch 1, dadurch gekennzeichnet, daß die Membran (3) in Höhe des Wulstes (8) an ihrer der Schale (1) zugewandten Seite eine Ausnehmung aufweist, in deren Inneren eine O-Ring-Dichtung (14) eingreift.

3. Verfahren zum Zusammenbau des hydropneumatischen Druckspeichers nach Anspruch 1, dadurch gekennzeichnet, daß der Haltering (9) oberhalb des Bereiches (9c) eine Verlängerung (9d) aufweist, die zur Aufnahme einer O-Ring-Dichtung (15) dient.

4. Verfahren zum Zusammenbau des hydropneumatischen Druckspeichers nach Anspruch 3, dadurch gekennzeichnet, daß die Schweißnaht (13) eine Unterbrechung (16) aufweist, so daß die Kontaktzonen zwischen den konischen Bereichen des Halterings, der Schale (1) und des Deckels (2) der Umgebungsluft ausgesetzt sind, um eine bessere Abdichtung sicherzustellen.
